# EUROPEAN PATENT APPLICATION

(11) **EP 1 600 961 A2**
(43) Date of publication of application: **30.11.2005**
(21) Application number: 05011369.5
(22) Date of filing: 25.05.2005
(51) Int. Cl.: G11B 7/12, G11B 7/135

(54) **Optical pickup device**

(30) Priority: 25.05.2004 JP 2004154060
(71) Applicant: Funai Electric Co., Ltd., Daito-shi, Osaka (JP)
(72) Inventor: Nagashima, Kenji, c/o Funai Electric Co., Ltd., Daito-shi Osaka (JP)
(74) Representative: Grünecker, Kinkeldey, Stockmair & Schwanhäusser Anwaltssozietät

(57) **Abstract**

A laser light source emits a laser light of an elliptical shape in its polarization plane in parallel to the information recording surface of an optical disc. The laser light is incident into a raising unit, which is placed in a manner that the plane including the optical axis of the incident light and the optical axis of the reflected light forms about 45 degrees with respect to the tangential line direction of the optical disc, in a manner that the direction of the major axis of the elliptical-shaped polarization plane of the laser light is in parallel to the information recording surface of the optical disc. Then, the laser light reflected by the raising unit is focused and irradiated on the information recording surface of an optical disc as a spot light.

## Description

### BACKGROUND OF THE INVENTION

### 1. Field of the Invention

The present invention relates to an optical pickup device assembled into a disc apparatus for recording information into and reproducing information from an optical disc such as a DVD (Digital Versatile Disc), a CD (Compact Disc) and, in particular relates to the technique of miniaturizing and thinning the optical pickup device.

### 2. Description of the Related Art

In recent years, a disc apparatus for recording information into and reproducing information from an optical disc such as a DVD or a CD serving as a recording medium has been utilized for various purposes. According to such a tendency, the disc apparatus has been desired to be further miniaturized and thinned. The disc apparatus is necessarily restricted in its miniaturization and thinning due to the size and the thickness of an optical pickup device for recording information into and reproducing information from an optical disc. Thus, the optical pickup device has been desired to be miniaturized and thinned, so that various kinds of optical pickup devices have been proposed. However, there arise a problem that it is difficult to easily miniaturize and thin the optical pickup device without increasing the number of optical parts while securing the utilizing efficiency of a laser light.

As a background art, there is a technique that, as to a laser light emitted in an elliptical shape in its polarization plane from a laser diode, an optical intensity of the laser light at the edge portion in the major axis direction thereof not used in the recording and reproduction of information is detected and the output of the laser light is controlled in accordance with the detected light intensity (see JP-A-2003-346376 or JP-A-2002-270941, for example).

Further, there is another background technique in which a laser light emitted from a laser diode is diffracted by a hologram pattern or a grating pattern, and one of the diffracted lights is detected to make the laser light hardly be influenced by the waveform variance or the variance at the time of manufacturing, thereby to control the output of the laser light (see JP-A-2002-251775, for example).

Further, there is still another background technique in which, as to a laser light emitted in an elliptical shape in its polarization plane from a laser diode, the minor axis direction of the spot light of the laser light is irradiated so as to be in parallel to the direction of tracks on the information recording surface of an optical disc, thereby thinning an optical pickup device (see JP-A-5-197996, for example).

Further, there is still another background technique in which the outgoing light optical system of a laser diode and the incident light optical system of an optical detecting element are disposed on the same plane in parallel to the information recording surface of an optical disc, then the laser light from the laser diode is refracted by a beam splitter, and the refracted laser light incident into a 45 degree mirror disposed beneath an objective lens so as to be vertical with respect to the objective lens is directed in a direction which forms 90 degrees or less on a spindle motor side with respect to a direction connecting the 45 degree mirror with the spindle motor, thereby thinning an optical pickup device (see JP-A-5-298775, for example).

However, according to the first technique among the aforesaid background techniques, as to the laser light emitted in the elliptical shape in its polarization plane from the laser diode, the optical intensity of the laser light at the edge portion in the major axis direction thereof not used in the recording and reproduction of information is detected and so the output of the laser light can be controlled in accordance with the detected light intensity. However, in the case where the PN junction of the laser diode is disposed vertically with respect to the recording surface of an optical disc thereby to use the direction with a larger divergence angle (the major axis direction) of the laser light, the direction with a larger divergence angle of the laser light extends in the vertical direction. Thus, there arises a problem that the optical pickup device can not be made thin.

Further, according to the second technique among the aforesaid background techniques, the laser light emitted from the laser diode is diffracted by the hologram pattern or the grating pattern, and the one of the diffracted lights is detected to make the laser light hardly be influenced by the waveform variance or the variance at the time of manufacturing, whereby the output of the laser light can be controlled. However, this technique does not relate to a technique which can easily miniaturize and thin the optical pickup device without increasing the number of optical parts while securing the utilizing efficiency of the laser light.

Further, according to the third technique among the aforesaid background techniques, as to the laser light emitted in the elliptical shape in its polarization plane from the laser diode, the minor axis direction of the spot light of the laser light is irradiated so as to be in parallel to the direction of tracks on the information recording surface of an optical disc, whereby the optical pickup device can be thinned. However, since the minor axis direction of the spot light of the laser light is made in parallel to the direction (tangential line direction of the optical disc) of the tracks on the information recording surface of an optical disc, the major axis direction of the spot light of the laser light is directed toward the adjacent track (radial direction of an optical disc). Thus there arises a problem that thinning of the optical pickup device is limited.

Furthermore, according to the fourth technique among the aforesaid background techniques, the outgoing light optical system of the laser diode and the incident light optical system of the optical detecting element are disposed on the same plane in parallel to the information recording surface of an optical disc, then the laser light from the laser diode is refracted by the beam splitter, and the refracted laser light incident into the 45 degree mirror disposed beneath the objective lens so as to be vertical with respect to the objective lens is directed in the direction which forms 90 degrees or less on the spindle motor side with respect to the direction connecting the 45 degree mirror with the spindle motor, whereby the optical pickup device can be thinned. However, since this technique requires the beam splitter having two refracting surfaces, there arises a problem that it is impossible to thin the optical pickup device at a low cost.

### SUMMARY OF THE INVENTION

The invention has been made in order to obviate the aforesaid problems of the conventional techniques and an object to the invention is to provide an optical pickup device which can miniaturize and thin a disc device for recording information on and reproducing information from an optical disc and also can easily miniaturize and thin the optical pickup device without increasing the number of optical parts while securing the utilizing efficiency of a laser light.

In order to attain the aforesaid object, according to the invention, an optical pickup device in which a spot-shaped laser light is irradiated on an information recording surface of an optical disc to record information on and reproduce information from the optical disc, including:
a laser light source which emits a laser light of an elliptical shape in its polarization plane in parallel to the information recording surface of an optical disc;
a raising unit which reflects, toward the information recording surface of the optical disc, the laser light emitted from the laser light source in an upward direction perpendicular to the information recording surface of the optical disc; and
a focusing unit which focuses the laser light reflected by the raising unit to irradiate the focused laser light on the information recording surface of the optical disc as a spot light, wherein
the raising unit is disposed in a manner that a plane including an optical axis of an incident light into and an optical axis of a reflection light from the raising unit forms a predetermined acute angle with respect to a tangential direction of the optical disc, and
the laser light emitted from the laser light source is incident into the raising unit in a manner that a direction of a major axis of an elliptical-shaped polarization plane of the laser light is in parallel to the information recording surface of the optical disc.

The raising unit is disposed preferably in a manner that the plane including the optical axis of the incident light into and the optical axis of the reflection light from the raising unit forms almost 45 degrees with respect to the tangential line direction of the optical disc.

The optical pickup device further includes a reflecting unit which refracts by 90 degrees and reflects the laser light, wherein the laser light emitted from the laser light source is refracted by 90 degrees and reflected within a plane in parallel to the information recording surface of the optical disc so that the laser light thus reflected is incident into the raising unit.

According to the provision of these units, a disc device for recording information on and reproducing information from an optical disc can be miniaturized and thinned, and also the optical pickup device can be miniaturized and thinned without increasing the number of optical parts while securing the utilizing efficiency of the laser light.

According to the optical pickup device of a first aspect of the invention, a laser light of an elliptical shape in its polarization plane is emitted from the laser light source in parallel to the information recording surface of an optical disc; the laser light emitted from the laser light source is refracted by 90 degrees and reflected within the plane in parallel to the information recording surface of the optical disc; the laser light thus reflected is incident into the raising unit, in a manner that the direction of the major axis of the elliptical-shaped polarization plane of the laser light is in parallel to the information recording surface of the optical disc, which is disposed in a manner that the plane including the optical axis of the incident light into and the optical axis of the reflection light from the raising unit forms almost 45 degrees with respect to the tangential line direction of the optical disc; and the laser light reflected by the raising unit is focused and irradiated on the information recording surface of the optical disc as a spot light. Thus, it is possible to suppress the increase of the thickness of the optical pickup device due to the spread of the laser light emitted from the laser light source in the direction of the major axis of the elliptical-shaped polarization plane of the laser light. Further, the disposing area occupied by the optical parts of the optical pickup device can be reduced and so the optical pickup device can be miniaturized and thinned. Furthermore, since the major axis of the elliptical-shaped polarization plane of the spot-shaped laser light focused on the information recording surface of the optical disc is directed so as to form about 45 degrees with respect to the tangential line of the optical disc, a good spot light can be irradiatedon the information recording surface of the optical disc.

According to the optical pickup device of a second aspect of the invention, the laser light of the elliptical shape in its polarization plane is emitted from the laser light source in parallel to the information recording surface of an optical disc; the laser light emitted from the laser light source is incident into the raising unit, in a manner that the direction of the major axis of the elliptical-shaped polarization plane of the laser light is in parallel to the information recording surface of the optical disc, which is disposed in a manner that the plane including the optical axis of the incident light into and the optical axis of the reflection light from the raising unit forms a predetermined acute angle with respect to the tangential line direction of the optical disc; and the laser light reflected by the raising unit is focused and irradiated on the information recording surface of the optical disc as a spot light. Thus, it is possible to suppress the increase of the thickness of the optical pickup device due to the spread of the laser light emitted from the laser light source in the direction of the major axis of the elliptical-shaped polarization plane of the laser light. Further, the optical pickup device can be made thin.

According to the optical pickup device of a third aspect of the invention, the raising unit, which reflects the laser light emitted from the laser light source in the upward direction perpendicular to the information recording surface of the optical disc, is disposed in a manner that the plane including the optical axis of the incident light into and the optical axis of the reflection light from the raising unit forms almost 45 degrees with respect to the tangential line direction of the optical disc. Thus, since the major axis of the elliptical-shaped polarization plane of the spot-shaped laser light focused on the information recording surface of the optical disc is directed so as to form about 45 degrees with respect to the tangential line of the optical disc, a good spot light can be irradiated on the information recording surface of the optical disc.

According to the optical pickup device of a fourth aspect of the invention, the laser light emitted from the laser light source is refracted by 90 degrees and reflected within the plane in parallel to the information recording surface of the optical disc so that the laser light thus reflected is incident into the raising unit. Thus, the disposing area occupied by the optical parts of the optical pickup device can be reduced and so the optical pickup device can be miniaturized and thinned.

### BRIEF DESCRIPTION OF THE DRAWINGS

These and other objects and advantages of this invention will become more fully apparent from the following detailed description taken with the accompanying drawings in which:
Fig. 1 is a perspective view showing an optical pickup device according to an embodiment of the invention; and
Fig. 2 is a plan view showing the optical pickup device according to the embodiment of the invention.

### DETAILED DESCRIPTION OF THE PREFERRED EMBODIMENTS

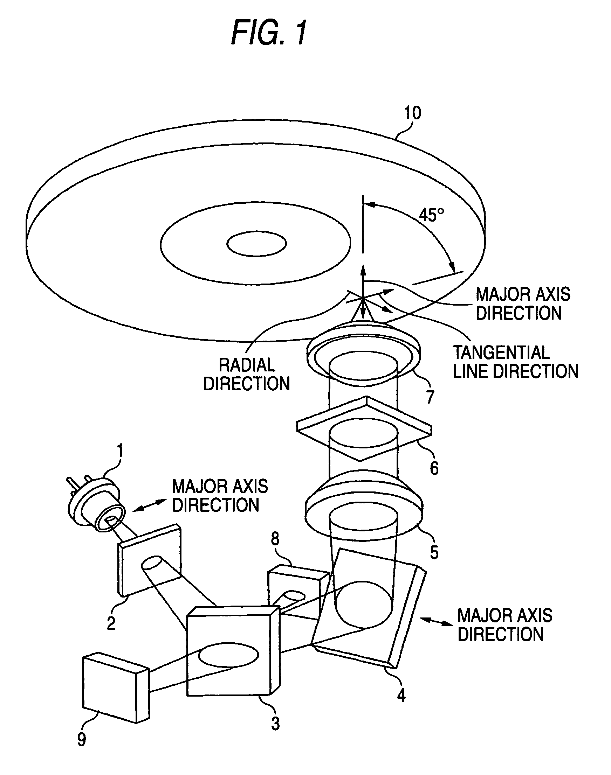

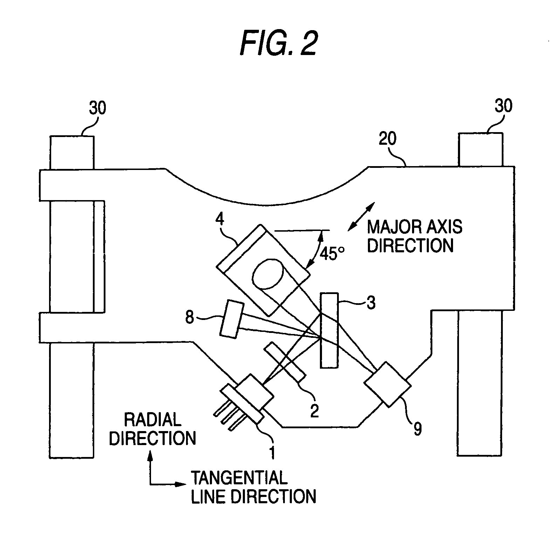

Hereinafter, the best mode for carrying out the invention will be explained with reference to drawings suitably. Fig.1 is a perspective view showing an optical pickup device according to an embodiment of the invention, and Fig. 2 is a plan view showing the optical pickup device according to the embodiment of the invention.

Hereinafter, the invention will be explained based on Fig. 1 showing the perspective view of the optical pickup device according to the embodiment of the invention, and Fig. 2 showing the plan view of the optical pickup device according to the embodiment of the invention.

As shown in Fig. 2, the optical pickup device includes a diode 2 which emits a laser light, a grating 2 which generates a diffraction light of the laser light generated from the laser diode 1, a parallel plane-plate half mirror 3 which refracts by 90 degrees and reflects the laser light emitted from the laser diode 1 within the plane in parallel to the information recording surface of the optical disc, a raising mirror 4 which reflects the laser light reflected by the parallel plane-plate half mirror 3 in the upper direction perpendicular to the information recording surface of the optical disc, and a quadrant optical detector 9 which detects the laser light reflected from the information recording surface of the optical disc. The laser diode, the grating, the parallel plane-plate half mirror, the raising mirror and the quadrant optical detector are placed on a chassis 20 which is driven by a thread motor (not shown) to thread in parallel to the information recording surface of the optical disc. The optical pickup device thus configured records information on and reproduce information from an optical disc.

In order to oscillate a laser light of a stable single transversal mode, the laser diode 1 is configured in a double hetero-junction structure in which the both sides of the active layer of an pn junction, that is, the light emitting portion of the laser light are sandwiched by semiconductor material having a large band gap. Thus, the laser light emitted from the laser diode 1 has a small divergence angle in the direction in parallel to the pn junction of the laser diode 1 but has a large divergence angle in the direction perpendicular to the pn junction of the laser diode 1. Further, in order to suppress the increase of the thickness of the optical pickup device, the pn junction of the laser diode 1 disposed so as to be in parallel to the information recording surface of the optical disc so that the direction of the major axis of the elliptical-shaped polarization plane of the laser light emitted from the laser diode 1 is in parallel to the information recording surface of the optical disc 10..

By means of the parallel plane-plate half mirror 3 disposed to have 45 degrees with respect to the optical axis of the laser diode 1 disposed on the chassis 20, the laser light emitted from the laser diode 1 is refracted by 90 degrees within the plane in parallel to the information recording surface of the optical disc and reflected toward the raising mirror 4 for reflecting the laser light in the upper direction perpendicular to the information recording surface of the optical disc 10. The laser light reflected by the parallel plane-plate half mirror 3 is incident into the raising mirror 4 so that the direction of the major axis of the elliptical-shaped polarization plane of the laser light is in parallel to the information recording surface of the optical disc 10. As shown in Fig. 2, the raising mirror 4 is disposed on the chassis 20 of the optical pickup device in a manner that the plane including the optical axis of the incident light and the optical axis of the reflected light for the raising mirror forms about 45 degrees with respect to the tangential line of the optical disc 10. when the raising mirror 4 is disposed so as to have about 45 degrees with respect to the tangential line of the optical disc 10 in this manner, each of the optical system including the laser diode 1 and the optical system including the quadrant optical detector 9 is made to have about 45 degrees with respect to the tangential line of the optical disc 10. Thus, the disposing area occupied by the optical parts of the optical pickup device can be reduced and so the optical pickup device can be miniaturized

As shown in Fig. 1, the laser light incident into the raising mirror 4 is reflected in the upward direction perpendicular to the information recording surface of the optical disc 10. The laser light reflected by the raising mirror 4 is formed into a parallel beam by a collimator lens 5, and polarized into the linearity polarized wave from the elliptically polarized wave by a quarter wave plate 6. The laser light thus polarized into the linearity polarized wave is focused on the information recording surface of the optical disc 10 by an objective lens (or objective lens system) 7 and so the spot light of the laser light thus focused is irradiated on the information recording surface of the optical disc 10. The raising mirror 4 is disposed so as to form about 45 degrees with respect to the tangential line of the optical disc 10 and the laser light emitted from the laser diode is incident into the raising mirror 4 in a manner that the major axis of the elliptical-shaped polarization plane of the laser light emitted from the laser diode is in parallel to the information recording surface of the optical disc 10. Thus, the spot light of the laser light thus focused on the information recording surface of the optical disc 10 is directed in a manner that the direction of the major axis of the elliptical-shaped polarization plane of the spot light forms about 45 degrees with respect to the tangential line of the optical disc 10. Accordingly, a preferable spot light which unlikely or scarcely spreads in the direction perpendicular to the track direction can be irradiated on the information recording surface of the optical disc 10.

The laser light reflected by the information recording surface of the optical disc 10 propagates reversely through the optical path of the optical system formed by the objective lens 7, the quarter wave plate 6, the lens 6 and the raisingmirror 4, then is incident into the parallel plane-plate half mirror 3 and incident into the quadrant optical detector 9 through the parallel plane-plate half mirror 3. The quadrant optical detector 9 detects the laser light reflected from the information recording surface of the optical disc 10, and a tracking control circuit (not shown) perfumes the tracking control of the optical pickup device based on a detection signal detected by the controller 9'. Then, a focus control circuit (not shown) performs the focus control of the optical pickup device, and a signal processing circuit (not shown) processes the detection signal from the quadrant optical detector 9 thereby to reproduce information recode on the information recording surface of the optical disc 10.

The laser light emitted from the laser diode 1 and passed through the grating 2 is partially reflected by the parallel plane-plate half mirror 3 toward a monitoring photo diode 8 disposed at the side surface of the raising mirror 4, whereby the monitoring photo diode 8 detects the light intensity of the laser light emitted from the laser diode 1. Then, the driving current for the laser diode 1 is controlled based on the detection signal from the monitoring photo diode 8 to perform the automatic power control (APC), so that the laser light with a stable predetermined light intensity canbe emitted from the laser diode 1. Thus, since the monitoring photo diode 8 is disposed beside the raising mirror 4 so as to detect the laser light, the laser light can be incident into the monitoring photo diode 8 without passing many optical parts, whereby the utilizing efficiency of the laser light can be secured.

Although the best mode for carrying out the invention has been described in detail, the invention is not limited thereto and various changes and modifications may be made within the normal knowledge of those skilled in the art. For example, although the explanation has been made as to the case where the laser light is reflected by the parallel plane-plate half mirror and the raising mirror, the laser light may be reflected by other optical parts such as prism etc.

Further, the explanation has been made as to the case where the laser light emitted from the laser diode is refracted by 90 degrees and reflected toward the raising mirror by the parallel plane-plate half mirror within the plane in parallel to the information recording surface of the optical disc, whilst the laser light reflected from the information recording surface of the optical disc is passed through the parallel plane-plate half mirror and detected by the quadrant optical detector. Alternatively, the laser light emitted from the laser diode may be passed through the parallel plane-plate half mirror and incident into the raising mirror, whilst the laser light reflected from the information recording surface of the optical disc may be refracted by 90 degrees and reflected toward the quadrant optical detector by the parallel plane-plate half mirror within the plane in parallel to the information recording surface of the optical disc thereby to detect the reflected light by the quadrant optical detector.

## Claims

1. An optical pickup device in which a spot-shaped laser light is irradiated on an information recording surface of an optical disc to record information on and reproduce information from the optical disc, comprising:
a laser light source which emits a laser light of an elliptical shape in its polarization plane in parallel to the information recording surface of an optical disc;
a reflecting unit which refracts by 90 degrees and reflects the laser light emitted from the laser light source within a plane in parallel to the information recording surface of the optical disc;
a raising unit which reflects, toward the information recording surface of the optical disc, the laser light reflected by the reflecting unit in an upward direction perpendicular to the information recording surface of the optical disc; and
a focusing unit which focuses the laser light reflected by the raising unit to irradiate the focused laser light on the information recording surface of the optical disc as a spot light, wherein
the raising unit is disposed in a manner that a plane including an optical axis of an incident light into and an optical axis of a reflection light from the raising unit forms almost 45 degrees with respect to a tangential line direction of the optical disc,
the reflecting unit refracts and reflects the laser light emitted from the laser light source toward the raising unit, and
the laser light reflected by the reflecting unit is incident into the raising unit in a manner that a direction of a major axis of an elliptical-shaped polarization plane of the laser light is in parallel to the information recording surface of the optical disc.

2. An optical pickup device in which a spot-shaped laser light is irradiated on an information recording surface of an optical disc to record information on and reproduce information from the optical disc, comprising:
a laser light source which emits a laser light of an elliptical shape in its polarization plane in parallel to the information recording surface of an optical disc;
a raising unit which reflects, toward the information recording surface of the optical disc, the laser light emitted from the laser light source in an upward direction perpendicular to the information recording surface of the optical disc; and
a focusing unit which focuses the laser light reflected by the raising unit to irradiate the focused laser light on the information recording surface of the optical disc as a spot light, wherein
the raising unit is disposed in a manner that a plane including an optical axis of an incident light into and an optical axis of a reflection light from the raising unit forms a predetermined acute angle with respect to a tangential direction of the optical disc, and
the laser light emitted from the laser light source is incident into the raising unit in a manner that a direction of a major axis of an elliptical-shaped polarization plane of the laser light is in parallel to the information recording surface of the optical disc.

3. The optical pickup device according to claim 2, wherein
the raising unit is disposed in a manner that the plane including the optical axis of the incident light into and the optical axis of the reflection light from the raising unit forms almost 45 degrees with respect to the tangential line direction of the optical disc.

4. The optical pickup device according to claim 2, further comprising
a reflecting unit which refracts by 90 degrees and reflects the laser light, wherein
the laser light emitted from the laser light source is refracted by 90 degrees and reflected within a plane in parallel to the information recording surface of the optical disc so that the laser light thus reflected is incident into the raising unit.
